# EUROPÄISCHE PATENTSCHRIFT

(11) **EP 2 032 845 B1**
(45) Veröffentlichungstag und Bekanntmachung des Hinweises auf die Patenterteilung: **30.10.2013**
(21) Anmeldenummer: 07725985.1
(22) Anmeldetag: 12.06.2007
(51) Int. Cl.: F03D 7/00, F03D 7/02, F03D 9/02, F03D 11/00

(54) **WINDENERGIEANLAGE MIT EINER AUTARKEN ENERGIEVERSORGUNG FÜR EINE BLATTVERSTELLEINRICHTUNG**
WIND ENERGY INSTALLATION WITH AN AUTONOMOUS ENERGY SUPPLY FOR A BLADE ADJUSTMENT DEVICE
ÉQUIPEMENT À ÉNERGIE ÉOLIENNE MUNI D'UNE ALIMENTATION À ÉNERGIE AUTONOME POUR UN DISPOSITIF DE POSITIONNEMENT DES PALES

(30) Priorität: 12.06.2006 DE 102006027224
(43) Veröffentlichungstag der Anmeldung: 11.03.2009
(73) Patentinhaber: REpower Systems SE, 22297 Hamburg (DE)
(72) Erfinder: LETAS, Heinz-Hermann, 23701 Süsel (DE)
(74) Vertreter: Glawe, Delfs, Moll
(86) Internationale Anmeldenummer: PCT/EP2007/005180
(87) Internationale Veröffentlichungsnummer: WO 2007/144146

(56) Entgegenhaltungen:
- WO-A-02/05406
- DE-A1- 10 335 575
- DE-A1- 19 651 364
- DE-U1- 29 722 109

## Beschreibung

Die Erfindung betrifft eine Windenergieanlage mit einem durch einen Rotor mit verstellbaren Blättern angetriebenen Generator zur Erzeugung elektrischer Energie, wobei eine Pitchverstelleinrichtung zum Verstellen der Blätter vorgesehen ist, die einen Notkreis mit einem elektrischen Energiespeicher zum Betätigen der Blätter mittels eines Blattstellmotors aufweist.

Aus Sicherheitsgründen sind Windenergieanlagen mit pitchverstellbaren Rotorblättern in der Regel dafür eingerichtet, auch bei Ausfall des Netzes mittels eines autarken Energiespeichers die Blätter des Rotors zu verstellen. Um in einem solchen Fall die Windenergienanlage sicher stillsetzen zu können, ist eine Notantriebsvorrichtung vorgesehen. Aus der DE-B-103 35 575 ist ein Pitchverstellantrieb mit einer Notantriebseinrichtung bekannt, die einen Akkumulator als unabhängigen elektrischen Energiespeicher für den Pitchverstellantrieb aufweist. Der Akkumulator ist an einen Umrichter angeschlossen, so dass im Fehlerfall mittels eines Schalters der Akkumulator mit dem Umrichter verbunden wird, und damit die für die Betätigung des Motors erforderliche Energie bereitstellt. Es hat sich aber gezeigt, dass im Betrieb der Notantriebseinrichtung gewisse Lastzustände auftreten können, bei denen das zu verstellende Rotorblatt den Motor antreibt. Es entsteht dann ein Schiebezustand. Dabei wird elektrische Leistung in dem Blattstellmotor erzeugt, wodurch die Gefahr besteht, dass die erzeugte elektrische Leistung in den Akkumulator zurückgespeist wird. Eine solche Rückspeisung ist aus mehreren Gründen unerwünscht und kann zu Schädigungen führen. Bei der Rückspeisung können hohe Ladeströme auftreten, für die der Akkumulator nicht geeignet ist. Generell ist es so, dass der Innenwiderstand eines Akkumulators im Ladebetrieb höher ist als derjenige bei der Entladung, so dass bei der Ladung und insbesondere bei einer unerwünschten Ladung mit hohen Ladeströmen gefährlich hohe Batteriespannungen auftreten können. Ein weiterer schädlicher Effekt besteht darin, dass es im Fall der Rückspeisung zu einem Anstieg der Leerlaufdrehzahl des Blattstellmotors kommen kann. Dies führt zu einer Verschiebung der Kennlinien und erhöht die in der Pitchverstell-einrichtung und auf die Blätter einwirkenden Lasten.

Es ist vorgeschlagen worden, mittels einer Choppereinrichtung die von dem Blattstellmotor im Schiebebetrieb erzeugte elektrische Leistung zu vernichten, und so den Akkumulator vor einer schädlichen Hochstromladung zu schützen. Zur Steuerung des
Bremschoppers kann die Spannung oder der im Notkreis fließende Strom gemessen werden. Es hat sich aber gezeigt, dass bei einem spannungsgeführten Betrieb die Probleme des zu hohen Ladestroms nicht sicher in allen Betriebszuständen beherrscht werden können.

Der Erfindung liegt die Aufgabe zu Grunde, bei einer Windenergieanlage der eingangs genannten Art den Schutz des elektrischen Energiespeichers zu verbessern.

Die erfindungsgemäße Lösung liegt in den Merkmalen der unabhängigen Ansprüche. Vorteilhafte Weiterbildungen sind Gegenstand der abhängigen Ansprüche.

Bei einer Windenergieanlage mit einem durch einen Rotor mit verstellbaren Blättern angetriebenen Generator zur Erzeugung elektrischer Energie, wobei eine Pitchverstelleinrichtung zum Verstellen der Blätter vorgesehen ist, die einen Notkreis mit einem elektrischen Energiespeicher zum Betätigen der Blätter mittels
Energiespeichers verbunden ist, oder zur Erde oder zu einer anderen geeigneten Stromsenke geführt ist.

Kommt es bei einer schnellen Verstellung der Blätter des Rotors, insbesondere in ihre sichere Fahnenstellung, zu einem Schiebezustand aufgrund der an den Blättern angreifenden aerodynamischen Kräfte, so wirkt der Blattstellmotor als Generator. Er erzeugt damit einen Strom, der quasi rückwärts über den Notkreis zum elektrischen Energiespeicher fließt. Der Strom erreicht den elektrischen Energiespeicher aber nicht, sondern wird mittels des Nebenschlusszweigs abgeführt. Der Kern der Erfindung liegt in dem Gedanken, den Betrag des über den Nebenschlusszweig geführten Stroms so zu bestimmen, dass er dem von dem Blattstellmotor im Schiebebetrieb erzeugten Strom entspricht. Dies erreicht die Erfindung mit der Stromspiegeleinrichtung. Dadurch wird bewirkt, dass der in den elektrischen Energiespeicher rückgespeiste Strom, welcher der Differenz des von dem Blattstellmotor erzeugten Stroms und des über dem Nebenschlusszweig abgeführten Stroms entspricht, auf Null gebracht werden kann. So wird erreicht, dass kein Rückspeisestrom in die Batterie zurückfließt. Der der Erfindung zugrundeliegende Gedanke des Stromspiegels in dem Nebenschlusszweig sorgt damit auf verblüffend einfache Weise für einen sicheren Schutz des elektrischen Energiespeichers gegenüber Rückspeiseströmen.

Dabei kann die Stromspiegeleinrichtung in ihrer einfachsten Form derart ausgebildet sein, dass sie einen Eingang und einen Ausgang aufweist, wobei an dem Eingang eine Bestimmungseinrichtung für den Rückspeisestrom des Blattstellmotors angeschlossen ist und deren Ausgang den Strom durch den Nebenschlusszweig bestimmt. Dies ermöglicht es, die Stromspiegeleinrichtung auf einfache Weise aus passiven Bauelementen zu bilden. Dies verringert nicht nur den zur Herstellung erforderlichen Aufwand, sondern ermöglicht dank der geringen Komplexität auch eine hohe Zuverlässigkeit im Betrieb.

Alternativ oder zusätzlich kann aber auch vorgesehen werden, die Stromspiegeleinrichtung mit einer aktiven Steuerung zu versehen. Dazu ist die Stromspiegeleinrichtung zweckmäßigerweise so ausgebildet, dass sie in Serie zu einem Lastelement ein steuerbares Schaltelement aufweist, das mittels einer gesonderten Steuerung betätigt ist. Wenn das Schaltelement von der Steuerung angesteuert ist, schaltet es durch, so dass im Nebenschlusszweig der Strom durch das Lastelement fließen kann; ist das Schaltelement nicht angesteuert, so öffnet es und der Stromfluss im Nebenschlusszweig ist unterbrochen. Die Steuerung braucht nicht unbedingt als eine räumlich getrennte Einheit ausgeführt zu sein, sondern kann auch genauso gut in eine bereits vorhandene Steuereinheit, wie bspw. eine in der Regel sowieso vorgesehene Betriebsführungssteuereinheit, integriert sein.

Die Steuerung kann zweckmäßigerweise einen Taktgenerator aufweisen, der insbesondere als Pulsweitenmodulator (PWM) ausgeführt sein kann. Dies ermöglicht es, auf einfache Weise ein Ansteuersignal für das Schaltelement zu generieren. So erlaubt es insbesondere ein Pulsweitenmodulator, das Schaltelement mit einer festen Frequenz von bspw. 4 kHz anzusteuern, und über das Taktverhältnis den über den Nebenschlusszweig abzuführenden Strom zu bestimmen. Es besteht damit eine lineare Beziehung zwischen dem Tastverhältnis des Pulsweitenmodulators und dem Strom im Nebenschlusszweig. Ein solches lineares Übertragungsverhalten ist insbesondere dann von Vorteil, wenn zusätzliche Regelungen vorgesehen sind.

Zweckmäßigerweise ist an die Steuerung eine Bestimmungseinrichtung für den Rückspeisestrom angeschlossen. Hierbei wird es sich meistens um einen Messsensor für den Strom vom Blattstellmotor handeln. Es soll aber nicht ausgeschlossen sein, dass anstelle einer direkten Messung des Stroms im Wege einer Berechnung aus anderen Größen, die ggf. leichter messbar sind, wie eine Differenzspannung, ein Maß für die indirekte Bestimmung des Rückspeisstroms gebildet wird.

Gemäß einer bevorzugten Ausführungsform der Erfindung, die ggf. unabhängigen Schutz verdient, stellt die Steuerung zusätzliche Funktionen bereit, die über eine reine Stromspiegelfunktion hinausgehen. Bei dieser als "modifizierter Stromspiegel" bezeichneten Variante der Erfindung kann insbesondere vorgesehen sein, dass die Übertragungsfunktion des Stromspiegels einen Offset aufweist oder bezüglich ihrer Steigung veränderbar ist. Dazu kann zweckmäßigerweise ein Offsetmodul vorgesehen sein, das dazu ausgebildet ist, im Notbetrieb einen Grundstrom durch den Nebenschlusszweig einzustellen. Unter Grundstrom wird hier der Strom verstanden, der unabhängig davon, ob der Blattstellmotor geschleppt wird, und damit Rückspeisestrom erzeugt, oder nicht durch den Nebenschlusszweig fließt. Unter Notbetrieb wird hierbei die Betriebsart verstanden, in welcher die elektrische Energiespeichereinrichtung die elektrische Energie zur Betätigung des Blattstellmotors bereitstellt. Der von dem Offsetmodul bewirkte Grundstrom hat den Effekt, dass im Notbetrieb stets etwas Leistung verbraucht wird, wodurch die Spannung des elektrischen Energiespeichers verringert wird. Das hat insbesondere zur Folge, dass sich die Spannung ausgehend von der Ladeschlussspannung rasch auf die Nennspannung reduziert. Damit wird ein zusätzlicher Pufferbereich geschaffen, der den elektrischen Energiespeicher vor Überspannung im Fall der Rückspeisung von Strom durch den geschleppten Blattstellmotor schützt.

Um eine unerwünschte Belastung des elektrischen Energiespeichers insbesondere in solchen Fällen zu vermeiden, in denen der Blattstellmotor eine hohe Leistung zum Verstellen der Blätter aufbringen muss, kann zweckmäßigerweise eine Austasteinrichtung vorgesehen sein, die dazu ausgebildet ist, den Grundstrom bei Volllast des Blattstellmotors zu reduzieren. Durch die Reduktion des Grundstroms, die bis auf einen Wert Null geführt sein kann, wird erreicht, dass in solchen Situationen der volle, von dem elektrischen Energiespeicher bereitgestellte Strom in den Blattstellmotor fließt, und damit die maximale Leistung bereitgestellt wird.

Zweckmäßigerweise kann weiter vorgesehen sein, dass die Steuerung ein Steigungsstellmodul aufweist, das dazu ausgebildet ist, den Spiegelstrom im Nebenschlusszweig linear zu verstärken. Damit ist es ermöglicht, das Verhältnis zwischen dem Strom im Nebenschlusszweig und dem Rückspeisestrom des Blattstellmotors zu erhöhen. Damit können Puffer geschaffen werden zum Ausgleich von Toleranzen, die sich aufgrund einer nicht optimalen Bestimmung des Rückspeisestroms ergeben können. Insbesondere ermöglicht dies, auch weniger hochwertige Messeinrichtungen für die Bestimmung des Rückspeisestroms einzusetzen, oder den Rückspeisestrom indirekt aus anderen, zweckmäßigerweise ohnehin vorhandenen Messgrößen zu generieren.

Vorzugsweise kann die Steuerung weiter ein Schwellwertmodul aufweisen, das dazu ausgebildet ist, das Schaltelement derart anzusteuern, dass ein einstellbarer Maximalstrom im Nebenschlusszweig nicht überschritten wird. Damit wird erreicht, dass auch im Extremfall eine Überlastung von Komponenten im Nebenschlusszweig sicher verhindert werden kann. Der Gefahr eines Ausfalls des erfindungsgemäßen Stromspiegels und dem sich damit ergebenden Risiko eines vorschnellen Ausfalls des elektrischen Energiespeichers bzw. einer unerwünschten Kennlinienveränderung für die Pitchverstellung im Notbetrieb, kann damit entgegengewirkt werden.

Zweckmäßigerweise weist die Steuerung weiter ein Kompensationsmodul für den Energiespeicher auf, das dazu ausgebildet ist, in Abhängigkeit von dessen Ladezustand den Spiegelstrom zu modifizieren. Ist als Lastelement im Nebenschlusszweig ein Widerstand vorgesehen, so ist der durch ihn fließende Strom nicht nur von der Betätigung des Schaltelements abhängig, sondern auch von der Spannung des elektrischen Energiespeichers. Bei sinkender Batteriespannung führt dies zu einer entsprechenden Absenkung des Stroms im Nebenschlusszweig. Um zu verhindern, dass ein zu niedriger Strom im Nebenschlusszweig fließt, ist das Kompensationsmodul vorgesehen, welches in Abhängigkeit von der tatsächlichen Spannung das Ansteuersignal für das Schaltelement derart verändert, dass ein höherer Strom im Nebenschlusszweig erreicht wird. Im Idealfall ist das Kompensationsmodul derart eingestellt, dass der Strom im Nebenschlusszweig unabhängig wird von der tatsächlichen Spannung des elektrischen Energiespeichers. Um dies zu ermöglichen, ist vorzugsweise an dem elektrischen Energiespeicher eine Spannungsmesseinrichtung vorgesehen.

Vorzugsweise weist die Steuerung weiter ein Schutzmodul auf, das dazu ausgebildet ist, den Spiegelstrom in Abhängigkeit von einem,Belastungszustand des Lastelements zu vermindern. Die in den Nebenschlusszweig geführte elektrische Leistung, die von dem Lastelement dissipiert wird, ist im Quadrat abhängig von dem Strom. Insbesondere bei hohen Strömen kommt es dabei zu einem starken Anstieg der aufzunehmenden elektrischen Leistung. Dies kann zu einer Überbelastung der Komponenten im Nebenschlusszweig führen, insbesondere des Lastelements. Insbesondere besteht die Gefahr einer thermischen Überlastung, wodurch es leicht zu einem Ausfall des Lastelements und damit zu einem Versagen des Nebenschlusszweigs kommen kann. Um dem entgegenzuwirken, überwacht das Schutzmodul den Belastungszustand des Lastelements, und sorgt erforderlichenfalls für eine Verminderung des Stroms im Nebenschlusszweig. Zweckmäßigerweise ist zur Überwachung des Lastelements eine Temperaturmesseinrichtung vorgesehen. Dies gilt insbesondere dann, wenn das Lastelement als ein Bremswiderstand ausgeführt ist. Damit steht eine einfache und direkte Messmöglichkeit für den Lastzustand zur Verfügung. Alternativ kann aber auch vorgesehen sein, zur Vermeidung zusätzlicher Sensorik eine Schätzeinrichtung für den Belastungszustand vorzusehen. Sie ist dazu ausgebildet, aus einem Spannungssignal des elektrischen Energiespeichers und dem Ausgangssignal der Steuerung ein Maß für den thermischen Belastungszustand des Energiespeichers zu ermitteln. Um nicht nur bei kurzzeitig wirkenden Belastungsspitzen, sondern auch bei über längere Zeit wirkenden Belastungen den Belastungszustand des Lastelements besser ermitteln zu können, weist die Schätzeinrichtung zweckmäßigerweise ein Tiefpasselement auf. Seine Zeitkonstante ist so gewählt, dass es der thermischen Zeitkonstante des Lastelements entspricht. Damit kann auf einfache und zweckmäßige Weise eine Integrierfunktion bereitgestellt werden, um auch über einen längeren Zeitraum die von dem Lastelement zu tragende Belastung erfassen zu können. Vorzugsweise ist weiter eine Vergleichseinrichtung vorgesehen, an deren einem Eingang ein Ausgang des Tiefpasselements und an deren anderem Eingang ein Temperaturgrenzwertsignal angelegt ist. Es ist dazu ausgebildet, bei Überschreiten der Grenztemperatur ein Ausgangssignal auszugeben, wodurch das Schutzmodul den Strom durch den Nebenschlusszweig vermindert oder sogar auf Null reduziert.

Die Erfindung betrifft weiter ein Verfahren mit den Merkmalen des unabhängigen Verfahrensanspruchs. Zur Erläuterung der Funktionsweise wird auf vorstehende Ausführungen verwiesen.

Die Erfindung wird nachfolgend unter Bezugnahme auf die beigefügte Zeichnung erläutert, in der vorteilhafte Ausführungsbeispiele dargestellt sind. Es zeigen:

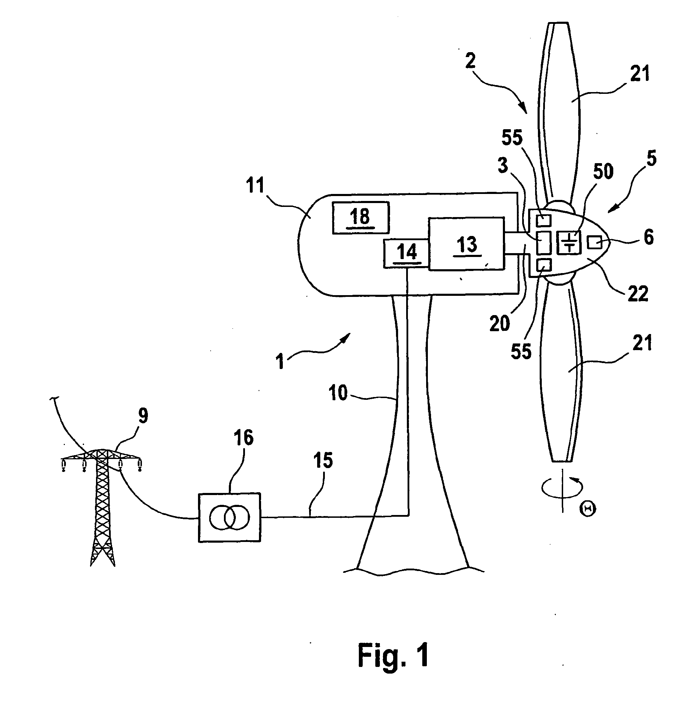

- Fig. 1: eine schematische Ansicht einer erfindungsgemäßen Windenergieanlage;
- Fig. 2: eine schematische Ansicht einer Pitchverstelleinrichtung gemäß einem ersten Ausführungsbeispiel;
- Fig. 3: eine schematische Ansicht einer Pitchverstelleinrichtung gemäß einem zweiten Ausführungsbeispiel;
- Fig. 4: eine Stromspiegeleinrichtung gemäß dem in Fig. 3 dargestellten Ausführungsbeispiel;
- Fig. 5: eine Stromspiegeleinrichtung gemäß dem in Fig. 2 dargestellten Ausführungsbeispiel;
- Fig. 6: eine schematische Ansicht einer Steuerung für das zweite Ausführungsbeispiel;
- Fig. 7: eine schematische Ansicht eines Schutzmoduls;
- Fig. 8: eine Funktionsdarstellung für die Steuerung;
- Fig. 9 bis 11: Kennlinien für verschieden eingestellte Stromspiegeleinrichtungen;
- Fig. 12: ein Kennlinienpaar darstellend die Stromspiegeleigenschaft und ein entsprechendes Ansteuersignal; und
- Fig. 13: Stromkennlinien im Notkreis.

Eine in ihrer Gesamtheit mit der Bezugsziffer 1 bezeichnete Windenergieanlage gemäß der Erfindung umfasst einen Turm 10 mit einer in Azimutebene drehbar an seinem oberen Ende angeordneten Gondel 11. An einer Stirnseite der Gondel 11 ist ein Rotor 2 drehbar über eine Rotorwelle 20 angeordnet. Der Rotor 2 umfasst mehrere (im dargestellten Beispiel 2) Rotorblätter 21. Eine Rotorblattnabe 22 verbindet die Rotorblätter 21 mit der Rotorwelle 20. Diese treibt einen in der Gondel 11 angeordneten Generator 13 zur Erzeugung elektrischer Energie an. Die elektrische Energie wird zu einem Umrichter 14 geführt und über eine Drehstromleitung (dargestellt ist nur eine Phase) 15 und einen Transformator 16 an ein elektrisches Netz 9 abgegeben. In der Gondel 11 ist weiter noch eine Steuerungseinrichtung 18 für die Windenergieanlage 1 angeordnet. Sie dient in an sich bekannter Weise zur Betriebsführung der Windenergieanlage.

Die Rotorblätter 21 sind bezüglich ihres Anstellwinkels θ verstellbar an der Nabe 22 angeordnet. Zur Verstellung des Anstellwinkels ist eine Pitchverstelleinrichtung 3 vorgesehen. Sie umfasst Blattstellmotoren 55, die im Bereich der Wurzel des jeweiligen Rotorblatts 21 angeordnet sind. Die Pitchverstelleinrichtung weist ein Notverstellmodul 5 auf. Dieses ist dazu ausgebildet, auch im Fall eines Ausfalls des Netzes 9 oder im Fall einer Störung der Energieversorgung der Rotorblattnabe 22 eine Notverstellung der Rotorblätter 21 zu bewirken. Um dafür ausreichend elektrische Energie zur Verfügung zu haben, ist in der Rotorblattnabe 22 ein autarker elektrischer Energiespeicher vorgesehen, der in dem dargestellten Ausführungsbeispiel als ein Akkumulator 50 ausgeführt ist.

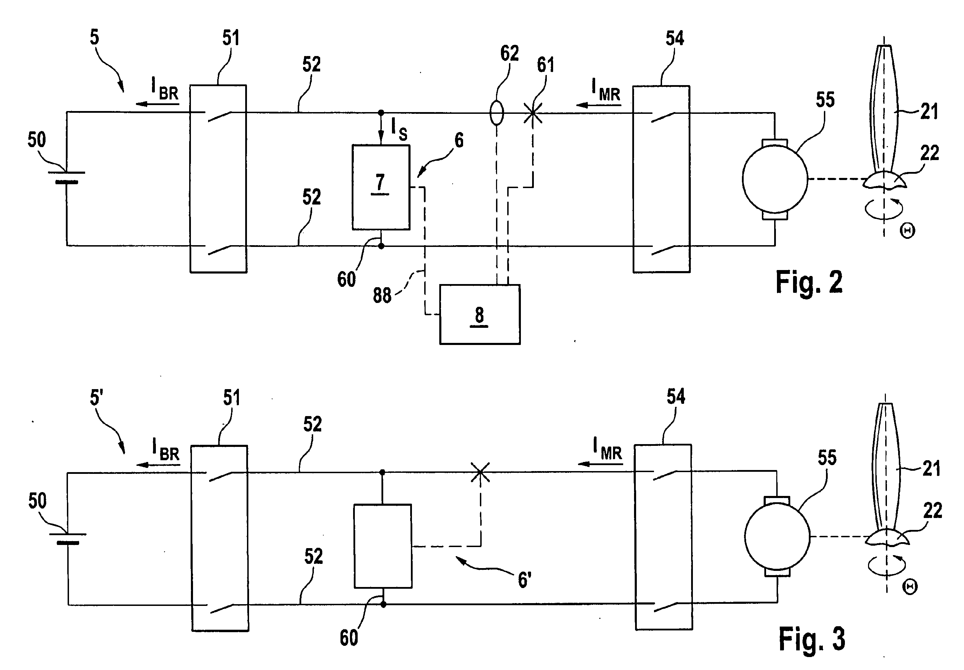

Aufbau und Funktionsweise der Pitchverstelleinrichtung im Notbetrieb werden nun in Bezug auf Fig. 2 erläutert. Die in ihrer Gesamtheit mit der Bezugsziffer 5 bezeichnete Pitchverstelleinrichtung für den Notbetrieb umfasst einen Batterieschütz 51, über welches der Akkumulator 50 mit Verbindungsleitungen 52, und weiter über ein Motorschütz 54 mit dem Blattstellmotor 55 verbunden ist. Es ist vorgesehen, dass im Notbetrieb die Pitchverstelleinrichtung 5 wie folgt betrieben wird. Von dem Akkumulator 50 bereitgestellte elektrische Energie fließt über das Batterieschütz 51 und die Verbindungsleitungen 52 zum Motorschütz 54 und zum Blattstellmotor 55. Der derart bestromte Motor dreht das ihm zugeordnete Rotorblatt 21 (oder mehrere ihm zugeordnete Rotorblätter 21 im Fall eines zentralen Pitchmotors), und zwar im Regelfall in die zum Stillsetzen der Windenergieanlage vorgesehene Fahnenstellung der Rotorblätter 21. Aufgrund von an den Rotorblättern 21 angreifenden Windkräften können aerodynamische Lasten erzeugt werden, wodurch das Rotorblatt 21 schneller in Richtung der Fahnenstellung bewegt wird, als es der Drehzahl des Blattstellmotors 55 entspricht. Dadurch gerät der Blattstellmotor 55 in einen Schleppbetrieb. Er wirkt in diesem Schleppbetrieb wie ein Generator. Er kann dann einen Strom erzeugen, der in Fig. 2 als Motorstrom I_{MR} dargestellt ist. Herkömmlicherweise würde dieser von dem Blattstellmotor 55 im Schleppbetrieb erzeugte Motorstrom über die Verbindungsleitungen 52 und das Batterieschütz 51 in den Akkumulator 50 geleitet werden. Der Akkumulator 50 würde dadurch aufgeladen werden. Da es sich hierbei um verhältnismäßig hohe Ströme handeln kann, besteht die Gefahr einer schädlichen Hochstromladung für den Akkumulator 50. Weiter besteht die Gefahr, dass es in dem Schleppbetrieb zu magnetischer Sättigung im Blattstellmotor 55 kommt, wodurch dessen Betriebskennlinie derart verschoben würde, dass seine Leerlaufdrehzahl in unerwünschter Weise ansteigt.

Um dem entgegenzuwirken, ist gemäß der Erfindung eine Stromspiegeleinrichtung 6 vorgesehen. Sie ist so geschaltet, dass ein Nebenschlusszweig 60 zwischen den Verbindungsleitungen 52 gelegt ist. In dem Nebenschlusszweig 60 ist die Stromspiegeleinrichtung 6 angeordnet. Aufbau und Funktionsweise der Stromspiegeleinrichtung 6 werden nachfolgend näher erläutert.

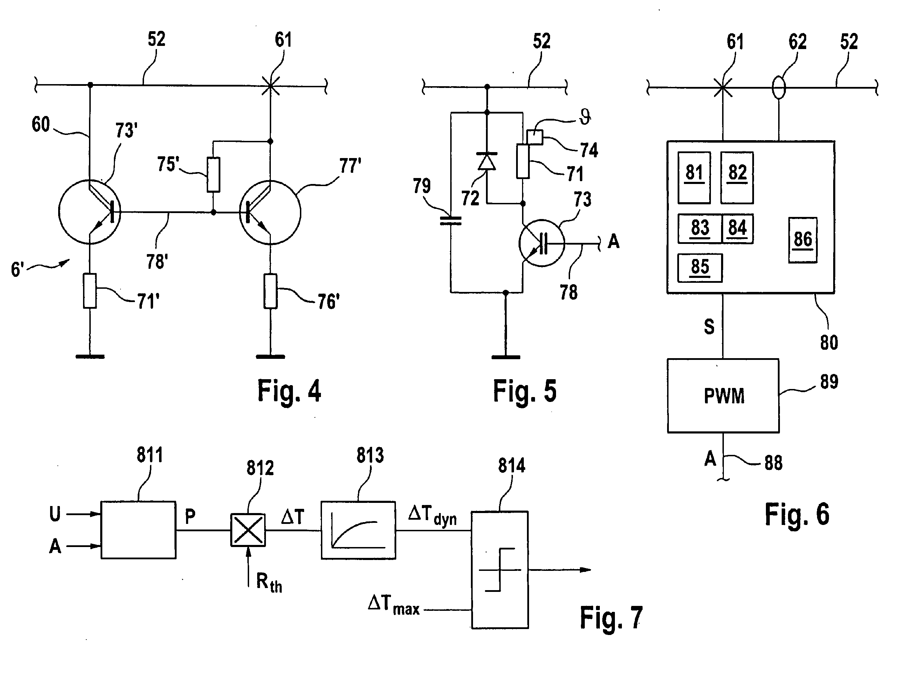

Zur Erläuterung dient eine besonders einfache, aber für den erfindungsgemäßen Zweck völlig ausreichende Ausführung einer Stromspiegeleinrichtung mit passiven Bauelementen, wie sie in ihrem Grundschema in Fig. 3 und im Detail in Fig. 4 dargestellt ist. Eine solche passive Stromspiegeleinrichtung 6' umfasst lediglich Widerstände und Transistoren. Mittels eines Stromsensors 61 wird der über die Verbindungsleitung 52 fließende Motorrückspeisestrom gemessen. Es ist zweckmäßig, wenn der Stromsensor 61 als ein Übertrager mit einem Übersetzungsverhältnis von 500:1 ausgebildet ist. Bei einem Motorrückspeisestrom von beispielsweise 50 A erzeugt er einen Steuerstrom von 0,1 A. Der Messsensor 61 ist an einen Kollektor eines Transistors 77' angeschlossen, dessen Emitter über einen Widerstand 76' mit Masse verbunden ist. Mit einer Basis des Transistors 77' ist ein zum Kollektor führender Widerstand 75' sowie ein Steueranschluss 78' verbunden. Diese Schaltung bewirkt, dass sich eine von dem Strom des Messsensors 61 abhängige Spannung an dem Steueranschluss 78' einstellt. Weiter ist ein Schalttransistor 73' vorgesehen. Er ist vorzugsweise als ein Darlington-Leistungstransistor ausgeführt (aus Symmetriegründen ist zweckmäßigerweise der Transistor 77' ebenfalls ein Darlington-Leistungstransistor). Der Schalttransistor ist mit seinem Kollektor an die Verbindungsleitung 52 und mit seinem Emitter über einen Lastwiderstand 71' an Masse angeschlossen. Damit bildet die Kollektor-Emitterstrecke des Schalttransistors 73' einen Nebenschlusszweig 60 für den Akkumulator 50. Der Steueranschluss 78' ist an die Basis des Schalttransistors 73' angelegt. Damit haben der Transistor 77' und der Schalttransistor 73' ein gemeinsames Basispotential. Der Lastwiderstand 71' weist in Bezug auf den Widerstand 75' einen Widerstandswert entsprechend dem inversen Übertragungsverhältnis auf. Das bedeutet mit dem obigen Übertragungsverhältnis 500:1 und einem beispielhaften Widerstand von 50 Ohm für den Widerstand 76' einen Wert von 0,1 Ohm für den Lastwiderstand 71'. Es handelt sich bei der Stromspiegeleinrichtung 6' gemäß Figur 4 um eine klassische Stromspiegelschaltung, die dazu ausgebildet ist, mit ihrem einen, den Transistor 77' beinhaltenden Zweig den von dem Blattstellmotor 55 im Schleppbetrieb erzeugten Motorstrom I_{MR} zu erfassen, und über den anderen, den Lasttransistor 73' beinhaltenden Zweig einen gleich großen Strom I_{S} über den Nebenschlusszweig 60 abzuführen. Im Idealfall bedeutet dies, dass der gesamte von dem Blattstellmotor 50 im Schleppbetrieb erzeugte Strom dank der Stromspiegeleinrichtung 6' über den Nebenschlusszweig 60 abgeführt wird. Zum Akkumulator 50 fließt damit kein Strom, d. h. der Strom I_{BR} ist Null. Der Akkumulator 50 ist damit vor der unerwünschten Hochstromladung durch den im Schleppbetrieb laufenden Blattstellmotor 55 geschützt. Weiter wird durch die erfindungsgemäße Ableitung des von dem Blattstellmotor 55 im Schleppbetrieb erzeugten Stroms erreicht, dass die Spannung zwischen den Verbindungsleitungen 52 und damit die Spannung an dem Blattstellmotor 55 auch im Schleppbetrieb nicht ansteigt. Dem unerwünschten Ansteigen der Leerlaufdrehzahl des Blattstellmotors 55 im Schleppbetrieb aufgrund magnetischer Sättigungserscheinungen wird dadurch entgegengewirkt.

In vielen Fällen ist eine solch einfache Stromspiegeleinrichtung 6', wie sie in Fig. 3 dargestellt ist, zum Schutz des Akkumulators 50 und zur Beibehaltung von günstigen Betriebseigenschaften im Notbetrieb ausreichend. Gemäß einem besonders vorteilhaften Aspekt der Erfindung, der gegebenenfalls unabhängigen Schutz verdient, kann aber auch eine erweiterte Stromspiegeleinrichtung 6 vorgesehen sein. Sie umfasst eine aktive Steuerung 8, die ein in dem Nebenschlusszweig 60 angeordnetes Schaltelement 7 betätigt. Es sei angemerkt, dass die Steuerung 8 nicht unbedingt als eine gesonderte Einheit ausgeführt zu sein braucht, sondern genauso gut in eine bereits vorhandene Steuerungseinrichtung für die Betriebsführung 18 integriert sein kann.

Es sei zunächst der Aufbau des Schaltelements 7 erläutert. Es umfasst entlang des Nebenschlusszweig 60 einen Lastwiderstand 71 und einen in Serie dazu angeordneten Halbleiterschalter 73, der vorzugsweise als ein IGBT ausgeführt ist. Ferner ist zum Schutz vor Spannungsspitzen eine Freilaufdiode 72 über den Lastwiderstand 71 vorgesehen. Weiterhin ist ein Kondensator 79 vorgesehen, der zur Vergleichmä-βigung des durch den Halbleiterschalter getakteten Stroms dient. Der Lastwiderstand 71 dient einerseits dazu, die durch den Nebenschlusszweig 60 geleitete elektrische Leistung zu dissipieren, und andererseits dient er zum Schutz des Halbleiterschalters 73 vor Überlastung. Dies bedeutet, dass der Wert für den Lastwiderstand 71 mindestens so groß gewählt werden muss, dass bei maximaler Spannung des Akkumulators 50 der zulässige Maximalstrom des Halbleiterschalters 73 nicht überschritten wird. Andererseits muss der Widerstand ausreichend klein gewählt werden, damit auch bei einer verminderten Spannung des Akkumulators 50 immer noch ein Mindeststrom durch den Nebenschlusszweig 60 erreicht wird. Für eine Pitchverstelleinrichtung mit einem Akkumulator mit einer Endspannung von 320 V und einem Innenwiderstand von 0,5 Ω hat sich ein Widerstandswert von R=10 Ω bewährt. Der als Halbleiterschalter 73 eingesetzte IGBT weist einen Steueranschluss 78 auf. An diesen ist die Steuerungseinrichtung der erweiterten Stromspiegeleinrichtung 6 angeschlossen.

Die Steuerung 8 weist ein Hauptmodul 80 sowie als Ausgangsstufe einen Taktgenerator auf, der vorzugsweise als Pulsweitenmodulator 89 ausgeführt ist. Der Ausgang des Pulsweitenmodulators 89 leitet über eine Verbindungsleitung 88 ein Ausgangssignal A an den Steuereingang 78 des Halbleiterschalterelements 73. Der Pulsweitenmodulator 89 ist dazu ausgebildet, aus einem normierten Steuersignal S (das Werte zwischen 0 und 1 annehmen kann) ein Taktsignal mit einer Frequenz von bspw. 4 kHz zu erzeugen, und in Abhängigkeit von der Größe des normierten Steuersignals das Tastverhältnis des Taktsignals zwischen 0 und 100 % zu variieren. Vorzugsweise nimmt der Pulsweitenmodulator 89 dabei eine lineare Umsetzung vor. Als Eingangssignal ist an das Hauptmodul 80 jeweils ein Messsensor für den Motorrückspeisestrom 61 und für die Spannung 62 vorgesehen. Das Hauptmodul 80 arbeitet derart, dass es basierend auf den mit dem Sensor 61 gemessenen Stromwert das Steuersignal S für den Pulsweitenmodulator 89 ermittelt, wobei verschiedene Korrekturfaktoren berücksichtigt werden können. Ein Korrekturfaktor besteht in der Einstellung eines Offsets. Dazu ist ein Offsetmodul 83 vorgesehen. Durch die Einstellung eines Offsets mittels des Offsetmoduls 83 wird erreicht, dass ein bestimmter Strom (der Offsetstrom) auch dann durch den Nebenschlusszweig 60 fließt, wenn der Blattstellmotor 55 nicht im Schleppbetrieb läuft. Mit dem Offsetstrom wird eine definierte Belastung des Akkumulators 50 bewirkt. Dies hat den gewünschten Effekt, dass die Spannung über den Akkumulator 50 rasch von der vergleichsweise hohen Ladeschlussspannung auf die Nennspannung gesenkt werden kann. Die Nennspannung bildet einen stabilen Betriebspunkt für den Akkumulator 50, da sich die Spannung bei fortschreitender Entladung des Akkumulators 50 nur langsam vermindert. Mit dem Offsetmodul 83 wirkt zweckmäßigerweise ein Austastmodul 84 zusammen. Es ist dazu ausgebildet, bei hoher Belastung des Akkumulators 50 den Offsetstrom zu reduzieren, und zwar erforderlichenfalls bis auf einen Wert Null herab. Damit ist sichergestellt, dass die volle Leistung des Akkumulators 50 zur Verfügung steht, wenn sie zum Antrieb des Blattstellmotors 55 benötigt wird.

Weiter ist ein Steigungsstellmodul 85 vorgesehen. Es dient dazu, das Verhältnis des Spiegelstroms im Nebenschlusszweig 60 zu dem von dem Blattstellmotor 55 erzeugten Rückspeisestrom linear zu verändern. Im Regelfall bedeutet diese Veränderung eine Erhöhung des Spiegelstroms, jedoch soll eine Verminderung nicht völlig ausgeschlossen sein. Mit einer Erhöhung des Spiegelstroms mittels des Steigungsstellmoduls 85 kann ein Puffer für Toleranzen bezüglich der Messung des Rückspeisestroms oder anderer Größen erzeugt werden. Dadurch ist sichergestellt, dass auch unter Einfluss von Toleranzen oder Messungenauigkeiten der Strom im Nebenschlusszweig stets groß genug ist, um den von dem Blattstellmotor 55 erzeugten Rückspeisestrom aufzunehmen. Damit wird auch unter widrigen Umständen sichergestellt, dass der Akkumulator 50 nicht durch den Rückspeisestrom geladen wird.

Weiter kann zweckmäßigerweise ein Kompensationsmodul 82 vorgesehen sein. Es ist dazu ausgebildet, einen Korrekturfaktor in die Berechnung des Steuersignals einzubringen, um Schwankungen der aktuellen Spannung des Akkumulators 50 auszugleichen. Dadurch können Schwankungen des Stroms im Nebenschlusszweig 60 aufgrund von veränderter Spannung des Akkumulators 50 ausgeglichen werden. Um die Spannung des Akkumulators 50 zu erfassen, ist das Kompensationsmodul 82 zweckmäßigerweise mit dem Spannungssensor 62 verbunden.

Weiter kann in dem Hauptmodul 80 ein Schutzmodul 81 vorgesehen sein. Es ist dazu ausgebildet, den Strom im Nebenschlusszweig 60 in Abhängigkeit von einem Belastungszustand des Lastwiderstands 71 zu verringern. Dazu kann an dem Lastwiderstand ein Temperatursensor 74 angeordnet sein. Droht die Temperatur an dem Lastwiderstand 71 ein unzulässig hohes Maß zu überschreiten, und damit der Lastwiderstand 71 überlastet zu werden, so wird mittels des Schutzmoduls 81 der Spiegelstrom in dem Nebenschlusszweig 60 erforderlichenfalls begrenzt. Dies basiert auf der Erkenntnis, dass es günstiger sein kann, eine temporäre Verringerung des Spiegelstroms hinzunehmen, als einen Ausfall der Spiegeleinrichtung insgesamt aufgrund von Zerstörung des Lastwiderstands 71 zu riskieren. - Es ist aber nicht unbedingt erforderlich, dass ein aufwendiger Temperatursensor 74 für den Belastungswiderstand 71 verwendet wird. Es kann auch vorgesehen sein, den Belastungszustand des Lastwiderstands 71 aus vorhandenen Messgrößen zu schätzen. Dazu kann eine entsprechende Schätzeinrichtung 86 vorgesehen sein. Ein Schemadiagramm ist in Fig. 7 dargestellt. Es umfasst eine Messung der Spannung des Akkumulators 50, vorzugsweise mittels des Messsensors 62, und weiter eine Erfassung des Ansteuersignals A mittels des Schaltelements 73, bspw. von der Leitung 88. Basierend auf diesen Eingangsgrößen ermittelt eine Berechnungseinheit 811 ein Leistungssignal, bspw. durch Quadrieren der gemessenen Spannung geteilt durch den Wert des Lastwiderstands 71 multipliziert mit dem Tastverhältnis des Ansteuersignals A. Dies ist ein Maß für die in dem Lastwiderstand 71 dissipierte Leistung. Mittels eines Multiplikationsglieds 812 kann unter Berücksichtigung eines Parameters für den Wärmewiderstand ein Temperaturdifferenzsignal ΔT bestimmt werden. Es ist ein Maß für die sich theoretisch ergebende stationäre Temperaturerhöhung. Zur Berücksichtigung der Dynamik kann ein Tiefpassglied 813 vorgesehen sein, welches die thermische Zeitkonstante des Lastwiderstands 71 berücksichtigt. An seinem Ausgang liegt dann ein Maß für die dynamische Temperaturerhöhung. Sie wird an einem Eingang eines Komparators 814 gelegt, an dessen anderen Eingang ein Maß für eine zulässige Grenztemperaturerhöhung ΔTₘₐₓ angelegt ist. Überschreitet die tatsächliche dynamische Temperaturerhöhung diesen Grenzwert, so gibt der Komparator ein Signal aus, wodurch das Schutzmodul 81 ausgelöst wird. Mit dieser Berechnung sind keine zusätzlichen Temperatursensoren 74 für den Lastwiderstand 71 erforderlich.

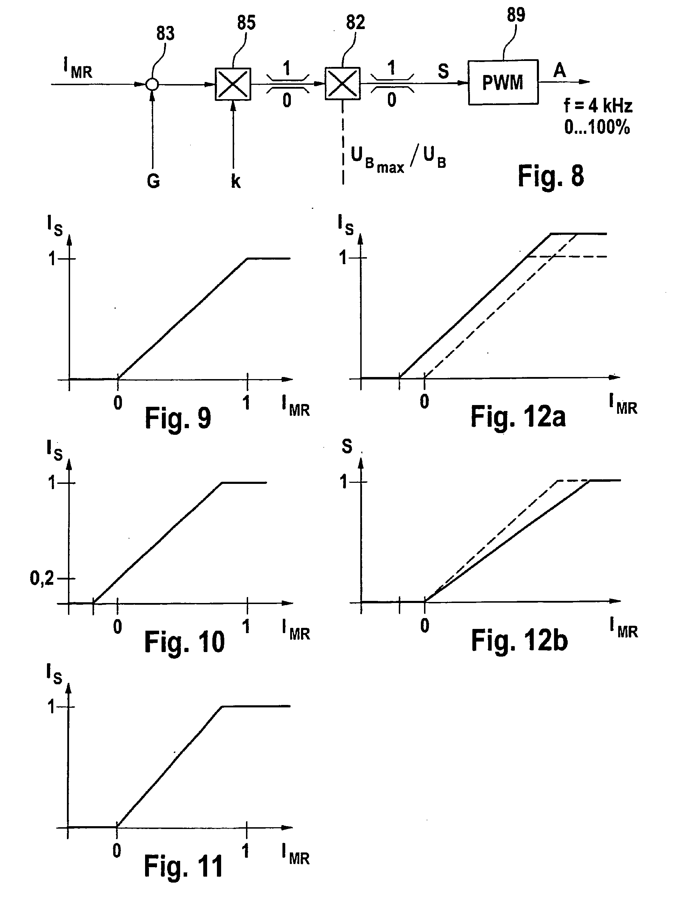

Die grundlegende Funktionsweise des Hauptmoduls 80 ist in Fig. 8 zusammenfassend dargestellt. Als Eingangsgröße dient ein Maß für den Motorrückspeisestrom I_{MR}. Mittels des Offsetmoduls 83 wird ein zusätzlich fließender Grundstrom G in den Nebenschlusszweig 60 hinzugefügt. Mittels des Steigungsstellmoduls 85 wird ein Verstärkungsfaktor k für die Stromspiegelkennlinie eingestellt. Werden für die Berechnung normierte Größen verwendet, so erfolgt eine Begrenzung auf den Bereich zwischen 0 und 1. Mittels des Kompensationsmoduls 82 wird ein Absinken der Spannung des Akkumulators 50 ausgehend von der Nennspannung berücksichtigt. Dies bewirkt eine Erhöhung des Steuersignals S und damit des Ansteuersignals A bei fallender Spannung des Akkumulators 50. Nach erneuter Begrenzung auf den Bereich 0 und 1 wird ein Ausgangssignal S des Hauptmoduls 80 gebildet. Es ist an den Eingang des Pulsweitenmodulators 89 angelegt. Dieser bildet aus dem normierten Steuersignal S das festfrequente Ansteuersignal A, dessen Tastverhältnis durch die Größe des Steuersignals bestimmt ist.

Nachfolgend wird anhand verschiedener Kennlinien erläutert, auf welche Weise der erfindungsgemäß erweiterte Stromspiegel mit und ohne Berücksichtigung der zusätzlichen Module betrieben werden kann.

In Fig. 9 ist die Kennlinie des reinen Stromspiegels dargestellt, wie sie sich bspw. bei der einfachen Ausführungsform gemäß Fig. 3 ergibt. Auf der Abszisse ist der Motorrückspeisestrom I_{MR} als normierter Wert dargestellt, und auf der Ordinate der Strom I_{S} im Nebenschlusszweig ebenfalls als normierter Wert. Fließt kein Rückspeisestrom I_{MR}, ist sein Wert also 0 oder kleiner, ist entsprechend der Spiegelstrom durch den Nebenschlusszweig 60 ebenfalls 0. Steigt der Rückspeisestrom I_{MR} an, so erhöht sich der durch den Nebenschlusszweig 60 fließende Spiegelstrom I_{S} linear, bis schließlich jeweils der Normwert erreicht wird. Bereits mit dieser Grundfunktion des Stromspiegels ist ein Schutz des Akkumulators 50 vor schädliche Hochstromladungen im Schleppbetrieb sichergestellt.

In Fig. 10 ist eine Kennlinie für einen erweiterten Stromspiegel gemäß Fig. 2 dargestellt. Es sind wie in Fig. 9 Motorrückspeisestrom und Strom im Nebenschlusszweig normiert dargestellt. Zusätzlich ist das Offsetmodul 83 vorgesehen. Es führt zu einer Verschiebung der Kennlinie in dem Diagramm nach links. Das bedeutet, dass auch bei einem Motorrückspeisestrom I_{MR} von 0 bereits ein Strom (im dargestellten Beispiel ein normierter Strom) in Höhe von 0,2 im Nebenschlusszweig 60 fließt. Tritt zusätzlich ein Motorrückspeisestrom auf, so erhöht sich der Strom im Nebenschlusszweig 60 aufgrund der Stromspiegeleinrichtung 6 entsprechend linear.

In Fig. 11 ist eine andere Variante dargestellt. Es sind wie in Fig. 9 Motorrückspeisestrom und Strom im Nebenschlusszweig normiert dargestellt. Hier ist zusätzlich das Steigungsstellmodul 85 vorgesehen. Es führt dazu, dass beim Auftreten eines Motorrückspeisestroms der Spiegelstrom um einen konstanten Faktor verstärkt wird. Dadurch fließt mehr Strom durch den Nebenschlusszweig 60, als von dem Blattstellmotor 55 im Schleppzustand erzeugt wird. Damit wird erreicht, dass auch unter Berücksichtigung von Toleranzen kein Rückspeisestrom zu dem Akkumulator 50 fließt.

In Fig. 12 a) ist eine Kennlinie dargestellt, wie sie sich unter Berücksichtigung des Offsetmoduls 83 und des Kompensationsmoduls 87 ergibt. Aufgrund des Offsetmoduls 83 ist die Kennlinie nach links verschoben (vgl. gestrichelte ansteigende Kennlinie). Weiter ist das Kompensationsmodul 81 vorgesehen. Dies führt dazu, dass bei einer Spannung des Akkumulators 50 unterhalb der Nennspannung der Strom im Nebenschlusszweig 60 voll erhalten bleibt, und nicht entsprechend der geringeren Spannung abgesenkt ist. In Fig. 12 b) ist das entsprechende Steuersignal S dargestellt, welches von dem Hauptmodul 80 in den Pulsweitenmodulator 89 übertragen wird. Die durchgezogene Linie stellt den Fall dar, wenn die Spannung des Akkumulators 50 der Nennspannung entspricht, und die gestrichelte Linie den Fall, wenn die Spannung geringer ist.

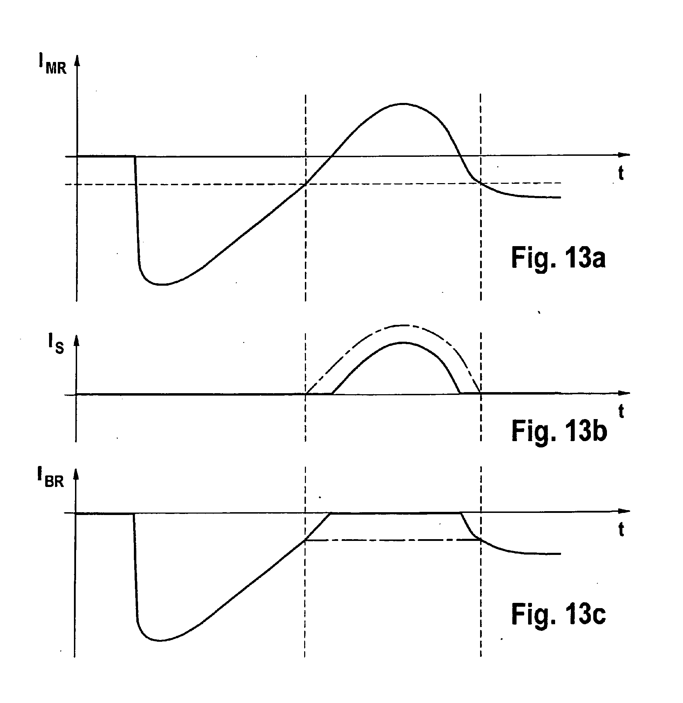

In Fig. 13 ist schließlich beispielhaft die Wirkung der beiden in Figuren 2 und 3 dargestellten Ausführungsformen gezeigt. Die durchgezogene Linie zeigt die Ausführungsform gemäß Fig. 3 mit einem einfachen Stromspiegel. Solange der Blattstellmotor 55 Strom aus dem Akkumulator 50 aufnimmt (I_{MR} ist negativ), fließt kein Strom I_{S} im Nebenschlusszweig 60 (siehe die durchgezogene Kurve im linken Abschnitt der Figuren a), b) und c)). Erst wenn der Motorrückspeisestrom I_{MR} positiv wird, fließt ein Spiegelstrom I_{S} durch den Nebenschlusszweig 60. Dieser entspricht in seinem Betrag genau dem positiven Anteil des Motorrückspeisestroms, so dass zu dem Akkumulator 50 kein Strom fließt (siehe mittlerer Bereich in den Diagrammen a), b) und c)). - Der rechte Bereich entspricht dem linken Bereich.

Mit der punktstrichlinierten Kurve ist der Stromfluss im Nebenschlusszweig bei der zweiten Ausführungsform gemäß Fig. 2 dargestellt. Bei dieser Ausführungsform mit dem sogenannten "erweiterten Stromspiegel" fließt dank des Offsetmoduls 83 ein Grundstrom immer dann durch den Nebenschlusszweig 60, wenn der Blattstellmotor 55 einen Rückspeisestrom I_{MR} im Schleppbetrieb erzeugt, oder wenn der den Motor antreibende Strom -I_{MR} einen Betrag von -0,2 des normierten Motorstroms überschreitet. Damit ist sichergestellt, dass auch im Fall des Schleppbetriebs des Motors ein Entladestrom aus dem Akkumulator 50 fließt.

## Patentansprüche

1. Windenergieanlage mit einem durch einen Rotor (2) mit verstellbaren Rotorblättern (21) angetriebenen Generator (13) zur Erzeugung elektrischer Energie, wobei eine Pitchverstelleinrichtung (3) zum Verstellen der Blätter vorgesehen ist, die einen Notkreis (5) mit einem elektrischen Energiespeicher (50) zum Betätigen eines Blattstellmotors (55) umfasst,
**dadurch gekennzeichnet, dass**
parallel zum Energiespeicher (50) ein Nebenschlusszweig (60) mit einer Stromspiegeleinrichtung (6, 6') vorgesehen ist, wobei die Stromspiegeleinrichtung (6, 6') so ausgebildet ist, um den Strom im Nebenschlusszweig (60) abhängig von einem Rückspeisestrom des Blattstellmotors (55) zu steuern.

2. Windenergieanlage nach Anspruch 1,
**dadurch gekennzeichnet, dass**
die Stromspiegeleinrichtung (6') einen Eingang und einen Ausgang aufweist, wobei an den Eingang eine Einrichtung zur Bestimmung des Rückspeisestroms des Blattstellmotors (55) angeschlossen ist und der Ausgang den Strom durch den Nebenschlusszweig (60) bestimmt.

3. Windenergieanlage nach Anspruch 1,
**dadurch gekennzeichnet, dass**
die Stromspiegeleinrichtung (6) ein Lastelement (71) und ein in Serie geschaltetes Schaltelement (73) aufweist, das mittels einer gesonderten Steuerung (8) betätigt ist.

4. Windenergieanlage nach Anspruch 3,
**dadurch gekennzeichnet, dass**
die Steuerung (8) einen Pulsweitenmodulator (89) aufweist.

5. Windenergieanlage nach Anspruch 3 oder 4,
**dadurch gekennzeichnet, dass**
die Steuerung (8) eine Bestimmungseinrichtung (81) für den Rückspeisestrom des Blattstellmotors (55) aufweist.

6. Windenergieanlage nach einem der Ansprüche 3 bis 5,
**dadurch gekennzeichnet, dass**
die Steuerung ein Offsetmodul (83) aufweist, das dazu ausgebildet ist, im Notbetrieb einen Grundstrom im Nebenschlusszweig (60) einzustellen.

7. Windenergieanlage nach Anspruch 6,
**dadurch gekennzeichnet, dass**
das Offsetmodul (83) eine Austasteinrichtung (84) aufweist, die dazu ausgebildet ist, bei Volllast des Blattstellmotors (55) den Grundstrom zu reduzieren.

8. Windenergieanlage nach einem der Ansprüche 3 bis 7,
**dadurch gekennzeichnet, dass**
die Steuerung ein Steigungsstellmodul (85) aufweist, das dazu ausgebildet ist, den Strom im Nebenschlusszweig linear zu verstärken.

9. Windenergieanlage nach einem der Ansprüche 3 bis 8,
**dadurch gekennzeichnet, dass**
die Steuerung ein Kompensationsmodul (82) aufweist, das dazu ausgebildet ist, in Abhängigkeit von dem Ladezustand des Energiespeichers (50) den Spiegelstrom im Nebenschlusszweig zu verändern.

10. Windenergieanlage nach Anspruch 9,
**dadurch gekennzeichnet, dass**
das Kompensationsmodul (82) eine Spannungsmesseinrichtung (62) zum Bestimmen des Ladezustands des elektrischen Energiespeichers (50) aufweist.

11. Windenergieanlage nach einem der Ansprüche 3 bis 10,
**dadurch gekennzeichnet, dass**
die Steuerung ein Schutzmodul (81) aufweist, das dazu ausgebildet ist, den Spiegelstrom im Nebenschlusszweig (60) in Abhängigkeit von einem Belastungszustand des Lastelements (71) zu vermindern.

12. Windenergieanlage nach Anspruch 11,
**dadurch gekennzeichnet, dass**
zur Bestimmung des Belastungszustands eine Temperaturmesseinrichtung (74) für das Lastelement (71) vorgesehen ist.

13. Windenergieanlage nach Anspruch 11,
**dadurch gekennzeichnet, dass**
eine Schätzeinrichtung (86) für den Belastungszustand vorgesehen ist, und die dazu ausgebildet ist, aus der Spannung des elektrischen Energiespeichers (50) und einem Ausgangssignal der Steuerung (8) ein Maß für den thermischen Belastungszustand zu bestimmen.

14. Verfahren zum Betreiben einer Pitchverstelleinrichtung für Blätter eines Rotors einer Windenergieanlage, wobei der Rotor (2) einen Generator (13) zur Erzeugung elektrischer
Energie antreibt, und wobei ein Blattstellmotor (55) in einem Notbetrieb über einen Notkreis (5) mit einem elektrischen Energiespeicher (50) betätigt wird,
**gekennzeichnet durch**
Anordnen einer Stromspiegeleinrichtung (6, 6') parallel zum elektrischen Energiespeicher (50) in einem Nebenschlusszweig (60) und Betreiben der Stromspiegeleinrichtung (6, 6') derart, um den Strom im Nebenschlusszweig (60) abhängig von einem Rückspeisestrom des Blattstellmotors (55) zu steuern.

15. Verfahren nach Anspruch 14,
**gekennzeichnet durch**
Betreiben des Stromspiegels in einem erweiterten Modus, bei dem ein Grundstrom im Nebenschlusszweig (60) eingestellt.

16. Verfahren nach Anspruch 14 oder 15,
**gekennzeichnet durch**
lineares Verstärken des Stroms im Nebenschlusszweig (60).

17. Verfahren nach einem der Ansprüche 14 bis 16,
**gekennzeichnet durch**
Bestimmen des Ladezustands des elektrischen Energiespeichers (50) und Erhöhen des Stroms im Nebenschlusszweig (60) in Abhängigkeit von dem Ladezustand.

18. Verfahren nach einem der Ansprüche 14 bis 17,
**gekennzeichnet durch**
Vermindern des Stroms im Nebenschlusszweig (60) in Abhängigkeit von einem Belastungszustand der Stromspiegeleinrichtung (6, 6').

19. Verfahren nach Anspruch 18,
**gekennzeichnet durch**
Schätzen des Belastungszustands **durch** Bestimmen eines Maß basierend auf einer Spannung des elektrischen Energiespeichers (50) und einem Ausgangssignal einer Steuerung (8) der Stromspiegeleinrichtung (6).

## Claims

1. Wind energy installation having a generator (13) which is driven by a rotor (2) with variable-pitch rotor blades (21) for production of electrical energy, with a pitch adjustment device (3) being provided for adjustment of the blades, which device has an emergency circuit (5) with an electrical energy store (50) for operation of a blade pitch control motor (55),
**characterized in that**
a shunt path (60) with a current mirror device (6, 6') is provided in parallel with the energy store (50), with the current mirror device (6, 6') being designed in order to control the current in the shunt path (60) as a function of a feedback current of the blade pitch control motor (55).

2. Wind energy installation as claimed in Claim 1,
**characterized in that**
the current mirror device (6') has an input and an output, with a device for determining the feedback current of the blade pitch control motor (55) being connected to the input, and with the output determining the current through the shunt path (60).

3. Wind energy installation according to Claim 1,
**characterized in that**
the current mirror device (6) has a load element (71) and a series-connected switching element (73) which is operated by means of a special controller (8).

4. Wind energy installation according to Claim 3,
**characterized in that**
the controller (8) has a pulse-width modulator (89).

5. Wind energy installation according to Claim 3 or 4,
**characterized in that**
the controller (8) has a determining device (81) for the feedback current of the blade pitch control motor (55) .

6. Wind energy installation according to one of Claims 3 to 5,
**characterized in that**
the controller has an offset module (83) which is designed to set a basic current in the shunt path (60) during emergency operation.

7. Wind energy installation according to Claim 6,
**characterized in that**
the offset module (83) has a blanking device (84) which is designed to reduce the basic current when the blade pitch control motor (55) is on full load.

8. Wind energy installation according to one of Claims 3 to 7,
**characterized in that**
the controller has a gradient control module (85) which is designed to linearly amplify the current in the shunt path.

9. Wind energy installation according to one of Claims 3 to 8,
**characterized in that**
the controller has a compensation module (82) which is designed to vary the mirror current in the shunt path as a function of the state of charge of the energy store (50).

10. Wind energy installation according to Claim 9,
**characterized in that**
the compensation module (82) has a voltage measurement device (62) for determining the state of charge of the electrical energy store (50).

11. Wind energy installation according to one of Claims 3 to 10,
**characterized in that**
the controller has a protective module (81) which is designed to reduce the mirror current in the shunt path (60) as a function of a load state of the load element (71).

12. Wind energy installation according to Claim 11,
**characterized in that**
a temperature measurement device (74) is provided for the load element (71), in order to determine the load state.

13. Wind energy installation according to Claim 11,
**characterized in that**
an estimation device (86) is provided for the load state and is designed to determine a measure of the thermal load state from the voltage of the electrical energy store (50) and from an output signal from the controller (8).

14. Method for operating a pitch adjustment device for blades of a rotor of a wind energy installation, with the rotor (2) driving a generator (13) for production of electrical energy, and with a blade pitch control motor (55) being operated via an emergency circuit (5) with an electrical energy store (50) during emergency operation,
**characterized by**
arrangement of a current mirror device (6, 6') in parallel with the electrical energy store (50) in a shunt path (60) and operation of the current mirror device (6, 6') in order to control the current in the shunt path (60) as a function of a feedback current of the blade pitch control motor (55).

15. Method according to Claim 14,
**characterized by**
operation of the current mirror in an extended mode, in which a basic current is set in the shunt path (60) .

16. Method according to Claim 14 or 15,
**characterized by**
linear amplification of the current in the shunt path (60) .

17. Method according to one of Claims 14 to 16,
**characterized by**
determination of the state of charge of the electrical energy store (50) and increase of the current in the shunt path (60) as a function of the state of charge.

18. Method according to one of Claims 14 to 17,
**characterized by**
reducing the current in the shunt path (60) as a function of a load state of the current mirror device (6, 6').

19. Method according to Claim 18,
**characterized by**
estimating the load state by determining a measure based on a voltage of the electrical energy store (50) and on an output signal from a controller (8) for the current mirror device (6).

## Revendications

1. Installation d'énergie éolienne comprenant une génératrice (13) entraînée par un rotor (2) ayant des pales de rotor (21) réglables destinée à la production d'énergie électrique, dans laquelle il est prévu un dispositif de réglage de pas (3) destiné à régler les pales qui comprend un circuit d'urgence (5) ayant un accumulateur d'énergie électrique (50) destiné à actionner un moteur de réglage des pales (55),
**caractérisée**
**en ce qu'**il est prévu, parallèlement à l'accumulateur d'énergie (50), une branche de dérivation (60) ayant un dispositif de courant en rapport géométrique (6, 6'), étant entendu que le dispositif de courant en rapport géométrique (6, 6') est réalisé de manière à diriger le courant dans la branche de dérivation (60) en fonction d'un courant d'alimentation de retour du moteur de réglage des pales (55).

2. Installation d'énergie éolienne selon la revendication 1,
**caractérisée**
**en ce que** le dispositif de courant en rapport géométrique (6') présente une entrée et une sortie, étant entendu qu'un dispositif destiné à déterminer le courant d'alimentation de retour du moteur de réglage des pales (55) est raccordé à l'entrée et que la sortie détermine le courant passant dans la branche de dérivation (60).

3. Installation d'énergie éolienne selon la revendication 1,
**caractérisée**
**en ce que** le dispositif de courant en rapport géométrique (6) présente un élément de charge (71) et un élément de commutation monté en série (73) qui est actionné au moyen d'une commande séparée (8).

4. Installation d'énergie éolienne selon la revendication 3,
**caractérisée**
**en ce que** la commande (8) présente un modulateur d'impulsions en largeur (89).

5. Installation d'énergie éolienne selon la revendication 3 ou 4,
**caractérisée**
**en ce que** la commande présente un dispositif de détermination (81) pour le courant d'alimentation de retour du moteur de réglage des pales (55).

6. Installation d'énergie éolienne selon l'une des revendications 3 à 5,
**caractérisée**
**en ce que** la commande présente un module d'offset (83) qui est réalisé de manière à régler un courant de base dans la branche de dérivation (60) en mode de fonctionnement d'urgence.

7. Installation d'énergie éolienne selon la revendication 6,
**caractérisée**
**en ce que** le module d'offset (83) présente un dispositif de blocage (84) qui est réalisé de manière à réduire le courant de base en cas de pleine charge du moteur de réglage des pales (55).

8. Installation d'énergie éolienne selon l'une des revendications 3 à 7,
**caractérisée**
**en ce que** la commande présente un module de réglage d'augmentation (85) qui est réalisé de manière à renforcer le courant de façon linéaire dans la branche de dérivation.

9. Installation d'énergie éolienne selon l'une des revendications 3 à 8,
**caractérisée**
**en ce que** la commande présente un module de compensation (82) qui est réalisé de manière à modifier le courant en rapport géométrique dans la branche de dérivation en fonction de l'état de charge de l'accumulateur d'énergie (50).

10. Installation d'énergie éolienne selon la revendication 9,
**caractérisée**
**en ce que** le module de compensation (82) présente un dispositif de mesure de la tension (62) destiné à déterminer l'état de charge de l'accumulateur d'énergie électrique (50).

11. Installation d'énergie éolienne selon l'une des revendications 3 à 10,
**caractérisée**
**en ce que** la commande présente un module de protection (81) qui est réalisé de manière à diminuer le courant en rapport géométrique dans la branche de dérivation (60) en fonction d'un état de chargement de l'élément de charge (71).

12. Installation d'énergie éolienne selon la revendication 11,
**caractérisée**
**en ce qu'**un dispositif de mesure de la température (74) est prévu pour l'élément de charge (71) afin de déterminer l'état de chargement.

13. Installation d'énergie éolienne selon la revendication 11,
**caractérisée**
**en ce qu'**un dispositif d'estimation (86) est prévu pour l'état de chargement, lequel est réalisé de manière à déterminer une mesure pour l'état de chargement thermique à partir de la tension de l'accumulateur d'énergie électrique (50) et d'un signal de sortie de la commande (8).

14. Procédé d'utilisation d'un dispositif de réglage de pas pour les pales d'un rotor d'une installation d'énergie éolienne, étant entendu que le rotor (2) entraîne une génératrice (13) destinée à la production d'énergie électrique et étant entendu que dans un mode de fonctionnement d'urgence, un moteur de réglage des pales (55) est actionné par le biais d'un circuit d'urgence (5) comprenant un accumulateur d'énergie électrique (50),
**caractérisé**
**par** l'agencement d'un dispositif de courant en rapport géométrique (6, 6') parallèlement à l'accumulateur d'énergie électrique (50) dans une branche de dérivation (60) et l'utilisation du dispositif de courant en rapport géométrique (6, 6') de manière à commander le courant dans la branche de dérivation (60) en fonction d'un courant d'alimentation de retour du moteur de réglage des pales (55).

15. Procédé selon la revendication 14,
**caractérisé**
**par** l'utilisation du courant en rapport géométrique dans un mode élargi dans lequel un courant de base est réglé dans la branche de dérivation (60).

16. Procédé selon la revendication 14 ou 15,
**caractérisé**
**par** un renforcement linéaire du courant dans la branche de dérivation (60).

17. Procédé selon l'une des revendications 14 à 16,
**caractérisé**
**par** la détermination de l'état de charge de l'accumulateur d'énergie électrique (50) et l'augmentation du courant dans la branche de dérivation (60) en fonction de l'état de charge.

18. Procédé selon l'une des revendications 14 à 17,
**caractérisé**
**par** une diminution du courant dans la branche de dérivation (60) en fonction d'un état de chargement du dispositif de courant en rapport géométrique (6, 6').

19. Procédé selon la revendication 18,
**caractérisé**
**par** une estimation de l'état de chargement au moyen de la détermination d'une mesure sur la base d'une tension de l'accumulateur d'énergie électrique (50) et d'un signal de sortie d'une commande (8) du dispositif de courant en rapport géométrique (6).
